# FASCICULE DE BREVET EUROPEEN

(11) **EP 2 691 311 B1**
(45) Date de publication et mention de la délivrance du brevet: **06.01.2016**
(21) Numéro de dépôt: 12710952.8
(22) Date de dépôt: 29.03.2012
(51) Int. Cl.: B65D 41/04

(54) **BOUCHON BI-INJECTE ET PROCEDE DE FABRICATION D'UN TEL BOUCHON**
IN ZWEI STUFEN SPRITZGEGOSSENE KAPPE UND VERFAHREN ZUR HERSTELLUNG EINER SOLCHEN KAPPE
BI-INJECTED CAP, AND METHOD FOR MANUFACTURING SUCH A CAP

(30) Priorité: 29.03.2011 FR 1100925
(43) Date de publication de la demande: 05.02.2014
(73) Titulaire: Bericap, 21600 Longvic (FR)
(72) Inventeur: ROPELE, Anne-Cécile, F-21000 Dijon (FR)
(74) Mandataire: Bugnion Genève
(86) Numéro de dépôt international: PCT/EP2012/055576
(87) Numéro de publication internationale: WO 2012/130916

(56) Documents cités:
- EP-A1- 1 373 086
- WO-A1-93/08093
- BE-A- 489 825
- DE-A1- 2 845 690
- DE-A1- 19 907 225
- US-A1- 2002 000 420

## Description

### DOMAINE TECHNIQUE DE L'INVENTION

L'invention se rapporte à un bouchon bi-injecté et plus particulièrement, à un bouchon bi-injecté intégrant un joint d'étanchéité souple.

### ÉTAT DE LA TECHNIQUE ANTÉRIEURE

On connaît des bouchons pourvus d'un fond, d'une paroi latérale filetée destinée à être vissée sur un col de récipient, et d'une jupe annulaire d'étanchéité principale faisant saillie à partir du fond et disposée radialement à l'intérieur de la paroi latérale, cette jupe étant destinée à venir en appui radial contre une paroi cylindrique intérieure du col du récipient. Suivant le document WO 98 035 881 émanant de la demanderesse, cette paroi latérale intérieure peut comporter un bourrelet annulaire de contact avec le col, ce bourrelet étant situé dans une partie d'extrémité libre de la jupe d'étanchéité et tourné radialement vers l'extérieur pour permettre de bien maîtriser le point de contact avec le col. Pour maîtriser également la pression de contact entre la jupe et le col, on peut conférer à la jupe une forme générale tronconique, s'évasant depuis le fond vers l'extrémité libre, comme décrit dans la demande WO 2005/077777. On peut également prévoir de recourber l'extrémité de la jupe, comme suggéré dans le document FR 2 900 908.

L'étanchéité obtenue avec ce type de bouchon est excellente, mais la ligne de contact assurant l'étanchéité se situe à l'intérieur du col, à distance du rebord supérieur du col. La paroi latérale extérieure filetée et le fond du bouchon assurent quant à eux également une protection de l'ensemble de l'extrémité du col contre les poussières ou les contaminations. On constate toutefois, dans certaines conditions de stockage extrêmes, que des contaminations ou pollutions peuvent se propager depuis l'extérieur, en passant par l'interface fileté entre bouchon et col, jusqu'au rebord de celui-ci.

Pour lutter contre ces contaminations extérieures, on peut disposer une ou plusieurs jupes d'étanchéité annulaires secondaires radialement entre la face intérieure de la paroi latérale et la jupe d'étanchéité principale et destinées à venir en appui sur le rebord du col du récipient, comme proposé dans le document EP 1 600 394. Toutefois, lorsque le bouchon est moulé entièrement dans une matière plastique, il est particulièrement délicat de dimensionner les jupes secondaires de manière à leur conférer une élasticité suffisante pour obtenir l'effet de barrière recherché. Ce type de jupes secondaires fines est bien adapté à des cols lisses, mais s'accommode mal de cols à la géométrie imparfaite.

Dans la demande WO 08 012 426 il a été proposé, pour améliorer l'étanchéité d'un bouchon d'obturation fileté comportant de manière classique un fond, une paroi latérale filetée intérieurement et une bande d'inviolabilité à l'extrémité de la paroi latérale, de combiner plusieurs moyens d'étanchéité, et notamment : une jupe annulaire d'étanchéité intérieure faisant saillie depuis le fond du bouchon pour venir en contact avec une paroi cylindrique intérieure du col, une jupe annulaire d'étanchéité extérieure, disposée radialement à l'extérieur de la jupe d'étanchéité intérieure, faisant saillie depuis le fond du bouchon pour assurer un contact avec une paroi extérieure du rebord du col du récipient, une jupe annulaire additionnelle disposée axialement entre le filetage intérieur de la paroi latérale du bouchon et la bande d'inviolabilité, faisant saillie radialement vers l'intérieur et axialement vers la bande d'inviolabilité, la jupe additionnelle étant destinée à venir en appui élastique contre une collerette du col du récipient, et un joint annulaire recouvrant la partie du fond située entre la jupe intérieure et la jupe extérieure, et qui vient en appui sur le rebord supérieur du col de la bouteille. Il est prévu que ce joint, préférentiellement en élastomère thermoplastique (TPE), puisse être appliqué soit a posteriori sur machine à jointer, soit bi-injecté avec le bouchon. Toutefois, aucun procédé de bi-injection n'est décrit et, dans la pratique, la bi-injection d'un tel bouchon pose des problèmes techniques.

Dans le document DE19907225 est divulgué un bouchon selon le préambule de la revendication 1.

On connaît par ailleurs, dans un autre contexte, des bouchons bi-matières comportant une première partie en matière plastique formant un fond, une paroi latérale de protection d'un col de récipient et une deuxième partie en matière souple, en particulier en thermoplastique élastomère (TPE), compatible avec le matériau plastique de la première partie, cette deuxième partie constituant une jupe d'étanchéité annulaire disposée radialement à l'intérieur de la paroi latérale. Dans le document EP 1 373 086 est proposée une technique d'accrochage d'un tel joint sur le fond d'un bouchon, par coulage ou moulage de la matière du joint sur le fond pourvue de saillies d'accrochage ayant par exemple un profil en queue d'aronde. La maîtrise du procédé de bi-injection de tels bouchons est délicate. Pour éviter que la matière souple constituant le joint d'étanchéité soit entrainée lors de l'injection de la matière plastique formant la première partie du bouchon, il est nécessaire d'attendre le refroidissement du joint.

### EXPOSÉ DE L'INVENTION

Selon un premier aspect de l'invention, celle-ci vise à constituer un bouchon bi-matière pourvu d'un joint d'étanchéité.

Pour ce faire est proposé selon ce premier aspect de l'invention un bouchon comportant
- une première partie en matière plastique, formant un fond destiné à recouvrir un col de récipient et une paroi latérale de protection destinée à entourer le col de récipient, et comportant deux gorges annulaires séparées par une protubérance annulaire, et
- une deuxième partie en matière souple compatible avec la matière plastique de la première partie et distincte de la matière plastique de la première partie, la deuxième partie étant soudée à la protubérance annulaire, la deuxième partie étant annulaire et constituant un joint d'étanchéité souple faisant saillie à partir du fond à l'intérieur de la paroi latérale, soudé à la première partie.

Par compatibles, on entend ici que les matériaux adhérant chimiquement l'un à l'autre et qui sont donc soudés lors du surmoulage.

Lors de la fabrication du bouchon par moulage, on procède en plusieurs étapes successives : dans un premier temps, on injecte de la matière souple pour constituer le joint d'étanchéité souple annulaire. Puis les parties mobiles du moule sont placées de manière à ce que la matière souple se trouve dans une gorge, en retrait par rapport à la face plane du moule qui définira la face intérieure du fond du bouchon. Lors de l'injection de la matière plastique dans le moule, la matière plastique vient remplir le volume disponible dans la gorge au-dessus de la matière souple. La gorge garantit l'intégrité de la géométrie de l'interface entre les deux matières. On peut ainsi effectuer les deux injections successives à une température élevée, en fusionnant l'interface, ce qui permet une bonne soudure entre les deux matières, tout en préservant l'intégrité de la géométrie de la partie en matière souple. L'épaisseur axiale de la protubérance est de préférence supérieure à 0,10 mm.

Suivant différentes variantes de réalisation, le bouchon peut présenter une ou plusieurs des caractéristiques suivantes :
- la matière souple peut être une matière élastomère, en particulier une matière thermoplastique élastomère.
- la matière plastique peut être un thermoplastique, notamment un polyéthylène, un polypropylène, un polyéthylène téréphtase (PET) ou un PLA.
- la paroi latérale peut comporter un filetage intérieur pour venir se visser sur un filetage extérieur du col du récipient.
- une jupe annulaire d'étanchéité principale faisant saillie à partir du fond et disposée radialement à l'intérieur de la paroi latérale peut équiper le bouchon, cette jupe étant destinée à venir en appui radial contre une paroi cylindrique intérieure du col du récipient, le joint d'étanchéité souple étant disposé radialement entre la paroi latérale et la jupe d'étanchéité principale ;
- la distance mesurée radialement entre la jupe principale d'étanchéité et le joint d'étanchéité souple, mesurée dans un plan perpendiculaire à l'axe de révolution de la paroi latérale à 1 mm de la paroi du fond,, est de préférence supérieure à 0,5 mm, ce qui caractérise l'épaisseur minimale de la paroi du noyau métallique définissant dans la cavité du moule, la paroi extérieure de la jupe d'étanchéité principale ;
- la jupe d'étanchéité principale peut comporter un bourrelet annulaire de contact avec le col, ce bourrelet étant situé dans une partie d'extrémité libre de la jupe d'étanchéité et tourné radialement vers l'extérieur pour permettre de bien maîtriser le point de contact avec le col;
- pour maîtriser également la pression de contact entre la jupe principale et le col, on peut conférer à la jupe une forme générale tronconique, s'évasant depuis le fond vers l'extrémité libre ;
- dans la mesure où la jupe principale a pour vocation d'interférer avec une paroi cylindrique intérieure du col alors que le joint souple a pour vocation de reposer sur le bord supérieur du col, on a avantage à ce que, avant la pose du bouchon sur le col, le cylindre géométrique de plus faible diamètre et qui enveloppe extérieurement la jupe d'étanchéité principale ait une intersection avec le joint souple ;
- la paroi en saillie du joint d'étanchéité souple peut avoir un profil en demi-cercle ou demi-ellipse ou un profil carré, rectangulaire ou trapézoïdal, pour constituer une surface de contact adaptée au rebord du col ;
- la paroi latérale du bouchon peut être équipée d'un anneau d'inviolabilité, lié au corps de la paroi latérale par une zone annulaire sécable, réalisée par exemple par une paroi de liaison annulaire continue mince entre anneau et paroi latérale ou par des pontets, ces pontets étant obtenus soit par moulage, soit par découpe ;
- dans ce cas, on a intérêt à ce que la partie de la jupe d'étanchéité principale destinée à venir en contact avec le col du récipient et l'extrémité libre du joint souple destinée à venir en contact avec le rebord du col du récipient soient situées axialement à une distance l'une de l'autre qui soit supérieure à l'allongement à la rupture de la zone sécable.

Suivant un mode de réalisation de l'invention, le fond du bouchon peut être pourvu d'un orifice verseur et constituer une pièce d'un ensemble de bouchage comportant en outre un capuchon, le verseur pouvant être obturé directement par le capuchon ou par l'intermédiaire d'une valve à déplacement en va-et-vient. Dans ce cas, le fond du bouchon n'est pas nécessairement plat dans sa totalité, mais seulement sur son pourtour annulaire extérieur coopérant avec le col du récipient, c'est-à-dire dans la partie incluant la paroi latérale, le joint souple et le cas échéant la jupe d'étanchéité principale.

Suivant un autre aspect de l'invention, celle-ci concerne un récipient pourvu d'un col fermé par un bouchon tel que décrit précédemment, le joint souple du bouchon étant en appui axial sur le rebord supérieur du col. Dans le cas où le bouchon comporte une jupe d'étanchéité principale, celle-ci se trouve en appui radial sur une paroi cylindrique intérieure du col.

Selon un autre aspect de l'invention, celle-ci a trait à un procédé de moulage d'un bouchon comportant au moins un fond, une paroi latérale et un joint d'étanchéité annulaire, comportant les étapes suivantes :
- on dispose deux pièces d'un moule, mobiles l'une par rapport à l'autre, de manière à constituer une cavité annulaire avec un orifice d'injection ; une première des pièces présentant une protubérance annulaire, la protubérance annulaire définissant une paroi supérieure de la cavité annulaire, l'autre pièce présentant une gorge annulaire définissant une paroi inférieure de la cavité annulaire, la protubérance annulaire pénétrant dans la gorge annulaire de manière à fermer la cavité annulaire ;
- on injecte dans la cavité annulaire une matière souple de manière à remplir la cavité annulaire,
- on écarte l'une de l'autre les deux pièces du moule de manière à constituer une cavité principale ayant une première partie destinée à constituer le fond du bouchon, se prolongeant par une deuxième partie forme générale cylindrique destinée à former la paroi latérale du bouchon, la première partie ayant une paroi intérieure définissant la face intérieure du fond du bouchon, la cavité annulaire contenant la matière souple débouchant dans la première partie de la cavité principale.

De préférence, l'injection de la matière plastique dans le moule se fait par un orifice d'injection aligné avec l'axe de symétrie de révolution de la cavité annulaire, ce qui assure un remplissage symétrique de la cavité et évite de potentiels problèmes d'ovalisation du bouchon. L'injection de la matière souple dans la cavité annulaire s'effectue quant à elle par un orifice d'injection décalé par rapport à l'axe de symétrie.

Certaines «traces» du procédé sont visibles sur le bouchon fini: dans la mesure où la première pièce forme la face supérieure (extérieure) du fond du bouchon, cette face supérieure présente une gorge annulaire qui est l'empreinte de la protubérance annulaire de la première pièce, cette gorge se situant au droit du joint annulaire souple. Par ailleurs, on peut le cas échéant repérer les traces des orifices d'injection.

La première partie de la cavité principale peut être conformée pour un bouchon à fond sensiblement plan, ou pour un bouchon dont le fond constitue un verseur.

### BRÈVE DESCRIPTION DES FIGURES

D'autres caractéristiques et avantages de l'invention ressortiront à la lecture de la description qui suit, en référence aux figures annexées, qui illustrent :
- la figure 1, une vue en coupe d'un bouchon selon un mode de réalisation de l'invention, monté sur un col de récipient ;
- la figure 2, un détail du bouchon de la figure 1 ;
- la figure 3, une vue schématisée du positionnement des pièces d'un moule de fabrication du bouchon des figures 1 et 2, dans une première phase d'injection ;
- la figure 4, une vue schématisée du positionnement des pièces du moule de fabrication du bouchon des figures 1 et 2, dans une deuxième phase d'injection ;
- la figure 5, une vue en coupe d'un détail d'une variante de réalisation.

### DESCRIPTION DETAILLEE D'UN MODE DE RÉALISATION

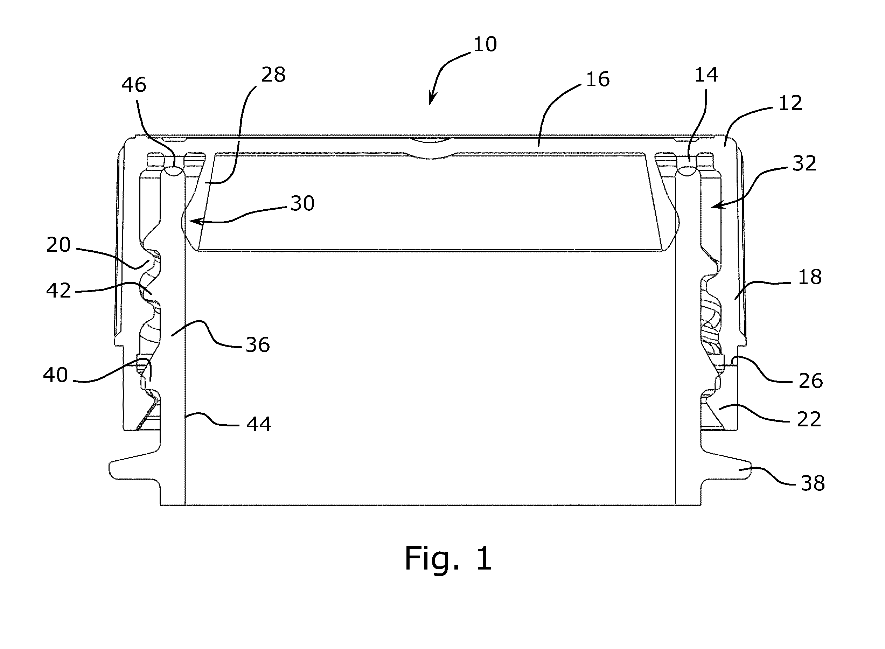

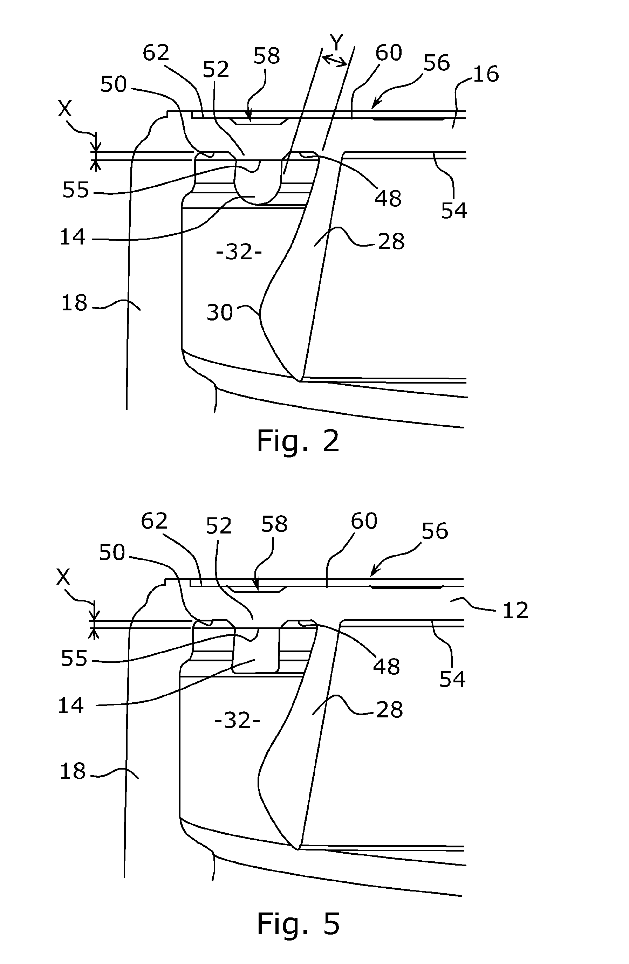

Sur les figures **1** et **2** est représenté un bouchon **10** composé de deux pièces, l'une en matière plastique destinée à former une enveloppe extérieure **12** du bouchon et l'autre en matière souple, formant un joint d'étanchéité annulaire **14** soudé à l'intérieur de la première pièce.

Plus spécifiquement, l'enveloppe **12** du bouchon, d'un seul tenant, comporte un fond discoïdal **16**, une paroi latérale extérieure **18** portant un filetage intérieur **20**, une bague d'inviolabilité **22** prolongeant l'extrémité libre **24** de la paroi latérale **18** et reliée à cette dernière par des pontets **26** de matière, et une jupe d'étanchéité tronconique **28** disposée à l'intérieur de la paroi latérale extérieure **18**, faisant saillie depuis le fond **16** et s'évasant en s'éloignant du fond **16**. La jupe d'étanchéité **28** est pourvue d'un renflement **30** à son extrémité.

Un volume annulaire **32** est délimité entre la paroi latérale extérieure **18**, la jupe d'étanchéité **28** et le fond **16**. Dans ce volume intérieur **32** est disposé le joint d'étanchéité **14** en matière souple.

Sur la figure **1**, le bouchon est vissé sur le col **36** d'un récipient, ce col comportant de manière classique une collerette inférieure **38** servant à la manutention du récipient, une collerette **40** d'accrochage sous laquelle vient s'accrocher la bague d'inviolabilité **22** et un filetage extérieur **42** coopérant avec le filetage intérieur **20** du bouchon pour le vissage et le dévissage de ce dernier.

Comme on le constate sur la figure **1**, le volume intérieur **32** délimité par la paroi latérale **18**, la jupe d'étanchéité **28** et le fond **16** du bouchon constitue un logement pour l'extrémité libre du col **36**. La jupe d'étanchéité **28** est en appui radial avec interférence sur une paroi intérieure cylindrique **44** du col. La pression de contact entre la jupe **28** et le col **36** est parfaitement maîtrisée grâce à la géométrie du renflement **30** de la jupe, dont la section axiale au voisinage du point de contact est un arc de cercle. Le joint d'étanchéité **14** est quant à lui en appui sur le rebord supérieur **46** du col. L'épaisseur radiale du joint **14** peut être relativement importante, du même ordre de grandeur que sa plus grande épaisseur axiale, et préférentiellement supérieure à la moitié de l'épaisseur de la paroi du col **36**. La face libre du joint, tournée vers l'intérieur du volume annulaire **32**, peut présenter une section en arc de cercle. L'interférence dimensionnelle avec le col en position fermée assure une large surface de contact et une forte pression de contact par écrasement du joint **14**.

Dans la mesure où la jupe d'étanchéité a vocation à interférer avec la paroi cylindrique intérieure du col alors que le joint souple a vocation à reposer sur le bord supérieur du col, on a avantage à ce qu'avant vissage sur le col, le cylindre géométrique de plus petit diamètre qui enveloppe extérieurement la jupe d'étanchéité principale ait une intersection avec le joint souple.

Comme on le constate sur la figure **2**, la face intérieure du fond, dans le volume annulaire **32**, présente deux gorges annulaires **48, 50** séparées par une protubérance annulaire **52** faisant saillie axialement à l'intérieur du volume **32**. Ces deux gorges annulaires, l'une radialement intérieure **48** située entre la protubérance **52** et la jupe **28**, l'autre radialement extérieure **50** située entre la protubérance **52** et la paroi latérale **18**, présentent chacune une face sensiblement plane. La face saillante **55** de la protubérance est également sensiblement plane et située à distance des fonds de gorge, comme illustré par la dimension **X** sur la figure **2**. Cette face saillante **55** constitue une interface de soudure du joint souple, qui se trouve par conséquent tout entier situé à une distance axiale minimale **X** du fond des gorges **48, 50**.

La face extérieure **56** du fond présente une gorge annulaire **58** située au droit de la protubérance **52** et du joint annulaire souple **14**. Cette gorge est bordée radialement de part et d'autre par des facettes planes **60, 62**. Le profil de la gorge **58** et des facettes planes **60, 62** correspond en négatif au profil de la protubérance **52** et des gorges **48, 50** de la face intérieure du fond située dans le volume annulaire **32**.

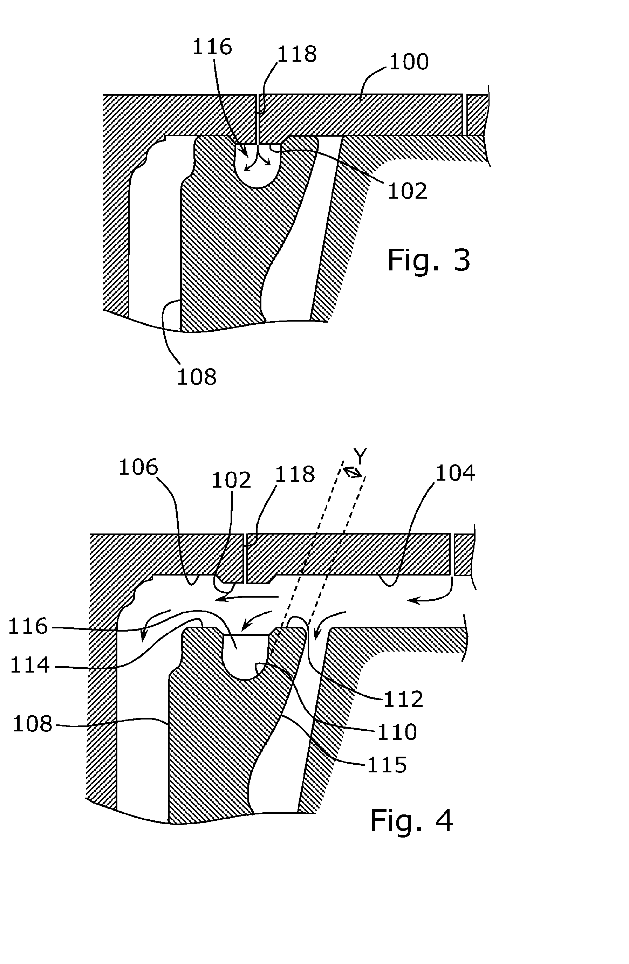

Les avantages de la protubérance apparaîtront mieux dans la description qui suit du procédé de fabrication du bouchon, illustré de manière schématique sur les figures **3** et **4**.

Le moule d'injection est constitué d'au moins deux pièces mobiles l'une par rapport à l'autre. L'une des pièces est un bloc fixe **100** qui constitue l'essentiel de la surface extérieure du bouchon, et notamment la partie de la surface extérieure du fond du bouchon située en regard du volume annulaire **32**. Le bloc fixe **100** comporte notamment des surfaces pour réaliser la gorge et les méplats, et en particulier une protubérance **102** épousant les formes de la gorge **58** et deux facettes planes **104, 106** de part et d'autre de cette protubérance **102**, pour réaliser les facettes **60, 62** de la face extérieure du fond **16** du bouchon.

L'autre pièce est un noyau **108** qui constitue notamment la surface intérieure de l'ensemble du bouchon **10**, et plus exactement la surface intérieure du bouchon fini, c'est-à-dire l'ensemble constitué de l'enveloppe **12** et du joint souple **14**. Le noyau **108** comporte donc une gorge annulaire **110** correspondant à l'empreinte du joint souple **14** et de la protubérance **52** et deux facettes plates **112, 114** de part et d'autre de cette gorge **110**, pour réaliser les fonds des gorges **48, 50**. Il comporte également une face **115** sensiblement tronconique définissant la paroi extérieure du joint d'étanchéité principal **28**. Il est à noter que la plus courte distance **Y** entre les parois **110** et **115** doit être suffisante pour ne pas fragiliser le noyau **108**. En pratique, la plus petite distance **Y** est supérieure à la distance **X**.

Dans une première phase de moulage illustrée sur la figure **3**, on dispose le noyau **108** au contact du bloc fixe **100**. La protubérance **102** pénètre partiellement dans la gorge annulaire **110** pour la refermer de façon hermétique, en préservant une cavité annulaire **116** ayant la forme du joint souple.

On injecte dans la cavité annulaire une matière souple de manière à remplir la cavité annulaire et à former le joint. Le trou d'injection **118** est situé dans la protubérance du bloc.

A l'issue de cette première phase, on écarte l'une de l'autre les deux parties **100, 108** du moule de manière à constituer une cavité principale dont l'empreinte correspond à la forme du bouchon fini, la gorge étant déjà remplie par le joint souple, comme illustré sur la figure **4**. Plus spécifiquement, la cavité présente une partie de forme générale discoïde destinée à constituer le fond du bouchon, se prolongeant par une partie forme générale cylindrique destinée à former la paroi latérale du bouchon, la partie de forme générale discoïde ayant une paroi intérieure définissant la face intérieure du fond du bouchon, la cavité annulaire contenant la matière souple débouchant dans la partie discoïde de la cavité principale.

On vient alors injecter de la matière plastique par un trou d'injection central. Comme illustré sur la figure **4**, la matière souple constituant le joint est située dans une région protégée du moule, relativement à l'écart du flux de matière plastique injectée. Ceci est dû au fait que la gorge du noyau du moule qui contient la matière souple du joint n'a pas été complètement remplie par celle-ci dans la première phase d'injection. Les flèches sur la figure **4** représentent le trajet de la matière plastique lors de son injection. La gorge protège la matière souple du joint du flux de matière plastique, ce qui évite qu'une partie de la matière souple soit emportée vers d'autres parties du moule. Il est donc possible d'effectuer l'injection de matière plastique sur la matière souple constitutive du joint en assurant la fusion à l'interface sans dégrader l'intégrité géométrique du joint.

L'écartement entre les deux pièces du moule correspond à l'épaisseur de matière plastique constituant le fond **16** du bouchon. De manière caractéristique, l'épaisseur de matière plastique est constante dans la région annulaire du fond qui délimite la cavité annulaire **32**, entre la jupe d'étanchéité **28** et la paroi latérale extérieure **18**.

Dans une phase ultime, le bouchon bi-matière est éjecté par retrait du noyau.

On comprend que la gorge **58**, qui n'a pas de fonction spécifique, résulte du procédé de fabrication puisqu'elle est l'empreinte de la protubérance **102**. Sa profondeur est égale à la hauteur **X** de la protubérance **52**.

Suivant la variante de réalisation représentée sur la figure **5**, le joint d'étanchéité annulaire **14** est conformé de façon à présenter une surface de contact annulaire sensiblement plane avec le rebord supérieur du col du récipient. Cette surface plane garantit une stabilité supplémentaire du joint sur le rebord du col lors du vissage. Dans cet exemple de réalisation, le joint **14** présente en section une surface sensiblement carrée, l'interface soudée à l'enveloppe **12** étant plane, parallèle et de dimension sensiblement identique à la surface de contact annulaire plane destinée à venir en contact avec le rebord du col du récipient.

D'autres formes de section de joint, rectangulaires ou plus généralement polygonales sont envisageables, par exemple une forme trapézoïdale. Dans cette hypothèse, le trapèze peut être orienté avec sa petite base faisant office de surface de contact avec le col de récipient et sa grande base faisant office d'interface avec l'enveloppe **12** du bouchon, ou inversement en contre-dépouille avec une petite base côté interface et une grande base faisant office de surface de contact avec le récipient, pour former un joint en queue d'aronde. Dans cette dernière hypothèse, l'angle du trapèze est de préférence inférieur à 10° et de préférence inférieur 5°..

Naturellement, de nombreuses autres variations sont possibles. L'interface de soudure avec le joint souple peut être oblique, de sorte que l'épaisseur du joint, mesurée entre l'interface de soudure et la face libre ne soit pas constante. La section du joint est alors un quadrilatère convexe. Une telle disposition peut permettre une meilleure adaptation à des cols de section dissymétriques. Plus généralement l'interface de soudure peut ne pas être plan. Le profil de la protubérance peut prendre diverses formes non polygonales.

Le profil des gorges peut différer de celui de l'exemple de réalisation.

La pièce en plastique peut être un verseur, recouvert par un capuchon lié au verseur par exemple par une charnière ou une lanière. Le capuchon peut être rapporté sur le verseur ou constitué d'une pièce avec lui.

## Revendications

1. Bouchon (10) comportant :
- une première partie (12) en matière plastique, formant un fond (16) destiné à recouvrir un col (36) de récipient et une paroi latérale (18) de protection destinée à entourer le col de récipient, et
- une deuxième partie (14) en matière souple compatible avec la matière plastique de la première partie et distincte de la matière plastique de la première partie, la deuxième partie étant annulaire et constituant un joint d'étanchéité souple faisant saillie à partir du fond (16) à l'intérieur de la paroi latérale (18), soudé à la première partie,
**caractérisé en ce que** la première partie comporte deux gorges annulaires (48, 50) séparées par une protubérance annulaire (52), la deuxième partie (14) étant soudée à la protubérance annulaire (52).

2. Bouchon selon la revendication 1, **caractérisé en ce que** la matière souple est une matière élastomère, de préférence une matière thermoplastique élastomère.

3. Bouchon selon l'une quelconque des revendications précédentes, **caractérisé en ce que** la matière plastique est un thermoplastique, notamment un polyéthylène ou polypropylène.

4. Bouchon selon l'une quelconque des revendications précédentes, **caractérisé en ce que** la paroi latérale comporte un filetage intérieur (20) pour venir se visser sur un filetage extérieur (42) du col du récipient.

5. Bouchon selon l'une quelconque des revendications précédentes, **caractérisé en ce que** la première partie (12) constitue une jupe annulaire d'étanchéité principale (28) faisant saillie à partir du fond (16) et disposée radialement à l'intérieur de la paroi latérale (18), la jupe d'étanchéité principale (28) étant destinée à venir en appui radial contre une paroi cylindrique intérieure (44) du col du récipient, le joint d'étanchéité souple (14) étant disposé radialement entre la paroi latérale (18) et la jupe d'étanchéité principale (28).

6. Bouchon selon la revendication 5, **caractérisé en ce que** la distance entre la jupe d'étanchéité principale (28) et le joint d'étanchéité souple (14), mesurée radialement dans un plan perpendiculaire à l'axe de révolution de la paroi latérale, tangent à une face de soudure entre la protubérance annulaire (52) et la deuxième partie (14), est supérieure à 0,5 mm.

7. Bouchon selon l'une quelconque des revendications 5 ou 6, **caractérisé en ce que** la jupe d'étanchéité principale (28) comporte un bourrelet annulaire (30) de contact avec le col (36), ce bourrelet étant situé dans une partie d'extrémité libre de la jupe d'étanchéité et tourné radialement vers l'extérieur.

8. Bouchon selon l'une quelconque des revendications 5 ou 6, **caractérisé en ce que** la jupe d'étanchéité principale (28) a une forme générale évasée depuis le fond vers l'extrémité libre.

9. Bouchon selon l'une quelconque des revendications 5 à 7, **caractérisé en ce que**, avant la pose du bouchon sur le col, le cylindre géométrique de plus faible diamètre qui enveloppe extérieurement la jupe d'étanchéité principale a une intersection avec le joint d'étanchéité souple (14).

10. Bouchon selon l'une quelconque des revendications précédentes, **caractérisé en ce que** le joint d'étanchéité souple (14) a une section radiale en demi-disque ou demi-ellipsoïde ou un profil carré, rectangulaire ou trapézoïdal.

11. Bouchon selon l'une quelconque des revendications précédentes, **caractérisé en ce que** la paroi latérale (18) du bouchon est équipée d'un anneau d'inviolabilité (22), lié au corps de la paroi latérale par une zone sécable (26).

12. Bouchon selon la revendication 11 et l'une quelconque des revendications 5 à 8, **caractérisé en ce que** la partie (30) de la jupe d'étanchéité principale (28) destinée à venir en contact avec le col du récipient et l'extrémité libre du joint d'étanchéité souple (14) destinée à venir en contact avec le rebord (46) du col du récipient sont situées axialement à une distance l'une de l'autre qui est supérieure à l'allongement à la rupture de la zone sécable (26).

13. Bouchon selon l'une quelconque des revendications précédentes, **caractérisé en ce que** le fond du bouchon est pourvu d'un orifice verseur et constitue une pièce d'un ensemble de bouchage comportant en outre un capuchon recouvrant le verseur.

14. Récipient pourvu d'un col fermé par un bouchon selon l'une quelconque des revendications précédentes, **caractérisé en ce que** le joint d'étanchéité souple (14) du bouchon est en appui sur le col.

15. Procédé de moulage d'un bouchon (10) comportant au moins un fond (16), une paroi latérale (18) et un joint d'étanchéité annulaire (14), comportant les étapes suivantes :
- on dispose deux pièces (100, 108) d'un moule, mobiles l'une par rapport à l'autre, de manière à constituer une cavité annulaire (116) avec un orifice d'injection (118) ; une première (100) des pièces présentant une protubérance annulaire (102), la protubérance annulaire définissant une paroi supérieure de la cavité annulaire, l'autre pièce présentant une gorge annulaire (110) définissant une paroi inférieure de la cavité annulaire, la protubérance annulaire (102) pénétrant dans la gorge annulaire (110) de manière à fermer la cavité annulaire (116) ;
- on injecte dans la cavité annulaire (116) une matière souple de manière à remplir la cavité annulaire,
- on écarte l'une de l'autre les deux pièces (100, 108) du moule de manière à constituer une cavité principale ayant une première partie destinée à constituer le fond du bouchon, se prolongeant par une deuxième partie de forme générale cylindrique destinée à former la paroi latérale du bouchon (10), la première partie ayant une paroi intérieure définissant la face intérieure du fond du bouchon, la cavité annulaire contenant la matière souple débouchant dans la première partie de la cavité principale.

16. Procédé de moulage selon la revendication précédente, **caractérisé en ce que** l'injection de la manière plastique dans le moule se fait par un orifice d'injection aligné avec l'axe de symétrie de révolution de la cavité annulaire.

## Patentansprüche

1. Kappe (10), aufweisend:
- einen ersten Teil (12) aus Kunststoff, der einen Boden (16) bildet, der bestimmt ist, einen Behälterhals (36) zu bedecken, und eine seitliche Schutzwand (18), die bestimmt ist, den Behälterhals zu umgeben, und
- einen zweiten Teil (14) aus elastischem Material, das mit dem Kunststoff des ersten Teils kompatibel ist und sich vom Kunststoff des ersten Teils unterscheidet, wobei der zweite Teil ringförmig ist und eine elastische Dichtung bildet, die, verschweißt mit dem ersten Teil, ab dem Boden (16) in das Innere der Seitenwand (18) hineinragt,
**dadurch gekennzeichnet, dass** der erste Teil zwei ringförmige Nuten (48, 50) aufweist, die ein ringförmiger Vorsprung (52) trennt, wobei der zweite Teil (14) mit dem ringförmigen Vorsprung (52) verschweißt ist.

2. Kappe nach Anspruch 1, **dadurch gekennzeichnet, dass** das elastische Material ein Elastomermaterial, vorzugsweise ein thermoplastisches Elastomermaterial, ist.

3. Kappe nach einem der vorangehenden Ansprüche, **dadurch gekennzeichnet, dass** der Kunststoff ein Thermoplastik, insbesondere ein Polyethylen oder Polypropylen, ist.

4. Kappe nach einem der vorangehenden Ansprüche, **dadurch gekennzeichnet, dass** die Seitenwand ein Innengewinde (20) aufweist, um auf ein Außengewinde (42) des Behälterhalses schraubbar zu sein.

5. Kappe nach einem der vorangehenden Ansprüche, **dadurch gekennzeichnet, dass** der erste Teil (12) eine ringförmige Hauptdichtschürze (28) bildet, die ab dem Boden (16) hervorragt und radial im Innern der Seitenwand (18) angeordnet ist, wobei die Hauptdichtschürze (28) bestimmt ist, sich radial auf einer zylindrischen Innenwand (44) des Behälterhalses abzustützen, wobei die elastische Dichtung (14) radial zwischen der Seitenwand (18) und der Hauptdichtschürze (28) angeordnet ist.

6. Kappe nach Anspruch 5, **dadurch gekennzeichnet, dass** der Abstand zwischen der Hauptdichtschürze (28) und der elastischen Dichtung (14), radial in einer senkrechten Ebene zur Drehachse der Seitenwand gemessen, die eine Schweißnahtseite zwischen dem ringförmigen Vorsprung (52) und dem zweiten Teil (14) tangiert, größer als 0,5 mm ist.

7. Kappe nach einem der Ansprüche 5 oder 6, **dadurch gekennzeichnet, dass** die Hauptdichtschürze (28) eine ringförmige Kontaktwulst (30) mit dem Hals (36) aufweist, wobei sich diese Wulst in einem freien Endteil der Dichtschürze befindet und radial nach außen gedreht ist.

8. Kappe nach einem der Ansprüche 5 oder 6, **dadurch gekennzeichnet, dass** die Hauptdichtschürze (28) eine vom Boden zum freien Ende allgemein erweiterte Form hat.

9. Kappe nach einem der Ansprüche 5 bis 7, **dadurch gekennzeichnet, dass**, vor dem Aufsetzen der Kappe auf den Hals, der geometrische Zylinder mit dem kleinsten Durchmesser, der die Hauptdichtschürze außen umgibt, eine Überschneidung mit der elastischen Dichtung (14) hat.

10. Kappe nach einem der vorangehenden Ansprüche, **dadurch gekennzeichnet, dass** die elastische Dichtung (14) einen radialen Querschnitt hat, der halbscheibenförmig, halbellipsoid ist oder ein quadratisches, rechteckiges oder trapezförmiges Profil hat.

11. Kappe nach einem der vorangehenden Ansprüche, **dadurch gekennzeichnet, dass** die Seitenwand (18) der Kappe mit einem Unverletzlichkeitsring (22) ausgestattet ist, der mit dem Körper der Seitenwand anhand einer Bruchzone (26) verbunden ist.

12. Kappe nach Anspruch 11 und nach einem der Ansprüche 5 bis 8, **dadurch gekennzeichnet, dass** sich der Teil (30) der Hauptdichtschürze (28), der bestimmt ist, mit dem Behälterhals in Kontakt zu kommen, und das freie Ende der elastischen Dichtung (14), das bestimmt ist, mit dem Rand (46) des Behälterhalses in Kontakt zu kommen, in einem axialen Abstand voneinander befinden, der größer als die Längung beim Bruch der Bruchzone (26) ist.

13. Kappe nach einem der vorangehenden Ansprüche, **dadurch gekennzeichnet, dass** der Boden der Kappe mit einer Gießöffnung ausgestattet ist und ein Teil einer Kappeneinheit darstellt, das ferner eine Abdeckung aufweist, die den Gießer bedeckt.

14. Behälter, der mit einem durch eine Kappe nach einem der vorangehenden Ansprüche geschlossenen Hals ausgestattet ist, **dadurch gekennzeichnet, dass** sich die elastische Dichtung (14) der Kappe auf dem Hals abstützt.

15. Verfahren für das Formen einer Kappe (10), die mindestens einen Boden (16), eine Seitenwand (18) und eine ringförmige Dichtung (14) aufweist, das die folgenden Schritte aufweist:
- Anordnen von zwei Teilen (100, 108) einer Form, die im Verhältnis zueinander bewegbar sind, derart, dass ein ringförmiger Hohlraum (116) mit einer Einspritzöffnung (118) gebildet ist, wobei ein erstes (100) der Teile einen ringförmigen Vorsprung (102) aufweist, wobei der ringförmige Vorsprung eine obere Wand des ringförmigen Hohlraums definiert, wobei das andere Teil, das eine ringförmige Nut (110) aufweist, eine Innenwand des ringförmigen Hohlraums definiert, wobei der ringförmige Vorsprung (102) derart in die ringförmige Nut (110) eindringt, dass der ringförmige Hohlraum (116) geschlossen ist,
- Einspritzen, in den ringförmigen Hohlraum (116), eines elastischen Materials, um den ringförmigen Hohlraum zu füllen,
- Beabstanden der zwei Teile (100, 108) der Form derart voneinander, dass ein Haupthohlraum gebildet wird, der einen ersten Teil hat, der bestimmt ist, den Boden der Kappe zu bilden, der sich durch einen zweiten, allgemein zylindrischen Teil verlängert, der bestimmt ist, die Seitenwand der Kappe (10) zu bilden, wobei der erste Teil eine Innenwand hat, die die Innenseite des Bodens der Kappe definiert, wobei der das elastische Material enthaltende ringförmige Hohlraum in den ersten Teil des Haupthohlraums ausmündet.

16. Formgebungsverfahren nach vorangehendem Anspruch, **dadurch gekennzeichnet, dass** das Einspritzen von Kunststoffmaterial in die Form durch eine Einspritzöffnung erfolgt, die mit der Symmetriedrehachse des ringförmigen Hohlraums fluchtet.

## Claims

1. A cap (10) including:
- a first portion (12) made of a plastic material, forming a bottom (16) for covering a container neck (36) and a protective side wall (18) for surrounding the container neck, and
- a second portion (14) made of a flexible material that is compatible with the plastic material of the first portion and separate from the plastic material of the first portion, the second portion being annular and consisting of a flexible seal, which projects from the bottom (16) toward the interior of the side wall (18) and which is welded to the first portion,
**characterized in that** the first portion includes two annular grooves (48, 50) separated by an annular protuberance (52), the second portion (14) being welded to the annular protuberance (52).

2. The cap according to claim 1, **characterized in that** the flexible material is an elastomer material, preferably a thermoplastic elastomer material.

3. The cap according to any one of the preceding claims, **characterized in that** the plastic material is a thermoplastic, in particular a polyethylene or a polypropylene.

4. The cap according to any one of the preceding claims, **characterized in that** the side wall includes an inner thread (20) to screw on an outer thread (42) of the neck of the container.

5. The cap according to any one of the preceding claims, **characterized in that** the first portion (12) forms a primary annular sealing skirt (28) protruding from the bottom (16) and positioned radially inside the side wall (18), the primary sealing skirt (28) being intended to bear radially against an inner cylindrical wall (44) of the neck of the container, the flexible seal (14) being positioned radially between the side wall (18) and the primary annular sealing skirt (28).

6. The cap according to claim 6, **characterized in that** the distance between the primary sealing skirt (28) and the flexible seal (14), measured radially in a plane perpendicular to the axis of revolution of the side wall, tangent to a weld face between the annular protuberance (52) and the second portion (14), is greater than 0.5 mm.

7. The cap according to any one of claims 5 or 6, **characterized in that** the primary sealing skirt (28) includes an annular bead (30) in contact with the neck (36), said bead being located in a free end portion of the sealing skirt and turned radially outward.

8. The cap according to any one of claims 5 or 6, **characterized in that** the primary sealing skirt (28) has a generally flared shape from the bottom toward the free end.

9. The cap according to any one of claims 5 to 7, **characterized in that**, before placement of the cap on the neck, the geometric cylinder with the smallest diameter and which outwardly envelops the primary sealing skirt has an intersection with the flexible seal (14).

10. The cap according to any one of the preceding claims, **characterized in that** the flexible seal (14) has a half-circle or half-ellipse profile or a square, rectangular or trapezoidal profile.

11. The cap according to any one of the preceding claims, **characterized in that** the side wall (18) of the cap is equipped with a tamperproof ring (22), connected to the body of the side wall by a frangible annular zone (26).

12. The cap according to claim 11 and any one of claims 5 to 8, **characterized in that** the portion (30) of the primary sealing skirt (28) intended to come into contact with the neck of the container and the free end of the flexible seal (14) intended to come into contact with the rim (46) of the neck of the container are situated axially at a distance from one another that is greater than the elongation at break of the frangible zone (26).

13. The cap according to any one of the preceding claims, **characterized in that** the bottom of the cap is provided with a pour spout and forms a part of a cap assembly further including a cover that covers the spout.

14. A container provided with a neck closed by a cap according to any one of the preceding claims, **characterized in that** the flexible seal (14) of the cap bears on the neck.

15. A method for molding a cap (10) including at least a bottom (16), a side wall (18) and an annular seal (14), including the following steps:
- two parts (100, 108) of a mold, mobile relative to one another, are placed so as to form an annular cavity (116) with an injection orifice (118); a first of theparts having an annular protuberance (102), the annular protuberance defining an upper wall of the annular cavity, the other part having an annular groove (110) defining a lower wall of the annular cavity, the annular protuberance (102) penetrating the annular groove (110) so as to close the annular cavity (116);
- a flexible material is injected into the annular cavity (116) so as to fill the annular cavity,
- the two parts (100, 108) of the mold are separated from each other so as to form a primary cavity having a first portion intended to form the bottom of the cap, extended by a second, generally cylindrical portion intended to form the side wall of the cap (10), the first portion having an inner wall defining the inner face of the bottom of the cap, the annular cavity containing the flexible material emerging in the first portion of the primary cavity.

16. The molding method according to the preceding claim, **characterized in that** the injection of the plastic material in the mold is done through an injection orifice aligned with the axis of symmetry of revolution of the annular cavity.
